# EUROPEAN PATENT APPLICATION

(11) **EP 2 101 075 A1**
(43) Date of publication of application: **16.09.2009**
(21) Application number: 08460012.1
(22) Date of filing: 17.04.2008
(51) Int. Cl.: F16D 55/226

(54) **Overrun disc brake**

(30) Priority: 14.03.2008 PL 38470508
(71) Applicant: "DEBON" Spólka z o.o, 64-120 Krzemieniewo (PL)
(72) Inventor: Malecki, Bogdan, Ludwinowo 54 (PL); Gotter, Zbigniew, Zalesie Wielkie 50a (PL)

(57) **Abstract**

An overrunn disk brake according to the invention having brake blocks pressed against a disk by operation of a lever which is actuated by a brake cable, characterised in that, it comprises a first cross beam (5) situated slidably in the slideways (8), the second cross beam (6) placed slidably on the first pawl beam (9) and the third cross beam (7) being guided on slideways (8), and wherein the first pawl beam (9) is guided in slideways (8).
A lever (20) is coupled with the third cross beam (7) and it is pivotally supported by its axle of rotation (23) on a second pawl beam (12).
The third cross beam (7) is movable in the horizontal plane and connected with the second cross beam (6).
In the first pawl beam (9) and the second pawl beam (12) there are placed slidable pawls (17) having teeth (18) which mate with toothed sections (16) of the bolts (13).

## Description

This invention relates to the overrunning disk brake having use for overrunningly braked trailers.

There is known, from the Polish protective description of the utility model no.49801, overrunning braking mechanism for pulling vehicle-trailer sets. That mechanism has got guide of clamp on two bolts mounted to bracket of frictional inserts.

The frictional inserts are pressed against the disk as the result of an action of a brake cable which starts the lever. The lever, by means of the adjusting screw presses agains the piston with protrusions analogous to protrusions of arched guide, which is fastened to the internal frictional insert.

After finishing of braking ,as a result of pressure of plate springs, the piston is withdrown to the exit position.

The disadvantage of the known overruning brakes are difficulties during changing of brake blocks and the lack of automatic disposal of clearance between brake blocks and the disk resulting from abrasion of the brake blocks. Clearances are eliminated by usage of adjusting screws in the construction of the brakes.

In order to eliminate these inconveniences, the overrunning disk brake has been prepared to ensure automatic regulation of clearance and easiness to access to brake blocks .

The overunning disk brake, according to the invention, having brake blocks pressed down to the disk by operation of the lever started by a brake cable, moreover, brake blocks are situated in the disk brake caliper, which is led, characterised in that, it has got the first cross beam, with the brake block ,situated by the outer side of the disk placed slidably along the axle in the slideways of the body , the second cross beam , with the brake block, situated by the inner side of the disk placed slidably, crosswise to the axle on the first pawl beam , which is slidable along the axle in the slideways of the body and the third cross beam situated behind the second cross beam having running along the axle on the outer shelves of the slideway of the body.

In the third cross beam there is a second pawl beam which is slidable along the axle in the slideways of the body.

The lever which is started by the cable, is placed between the second cross beam and the third cross beam and it is coupled with the third cross beam and it is resisted on the second pawl beam.

The third cross beam is joined self - aligningly in the horizontal plane with the second cross beam.

In the first pawl beam and in the second pawl beam there are situated pawls slidably, having teeth by means of which they mate with tooth bars on the bolts, on which there are situated the first cross beam , the first pawl beam and the second pawl beam .

The third cross beam is bound with the second pawl beam by springs . From below to the third cross beam and to the second cross beam the tension spring is mounted by its ends.

The overunning disk brake, according to the invention, has got compact construction and small overall dimensions. Its construction ensures automatic removal of clearance between brake blocks and the disk.

The brake, according to the invention,is used for overrunningly braked trailers of different type. Thanks to its construction it ensures efficiency of working while driving forward and while parking and automatic releasing of the brake while backing a vehicle with a trailer.

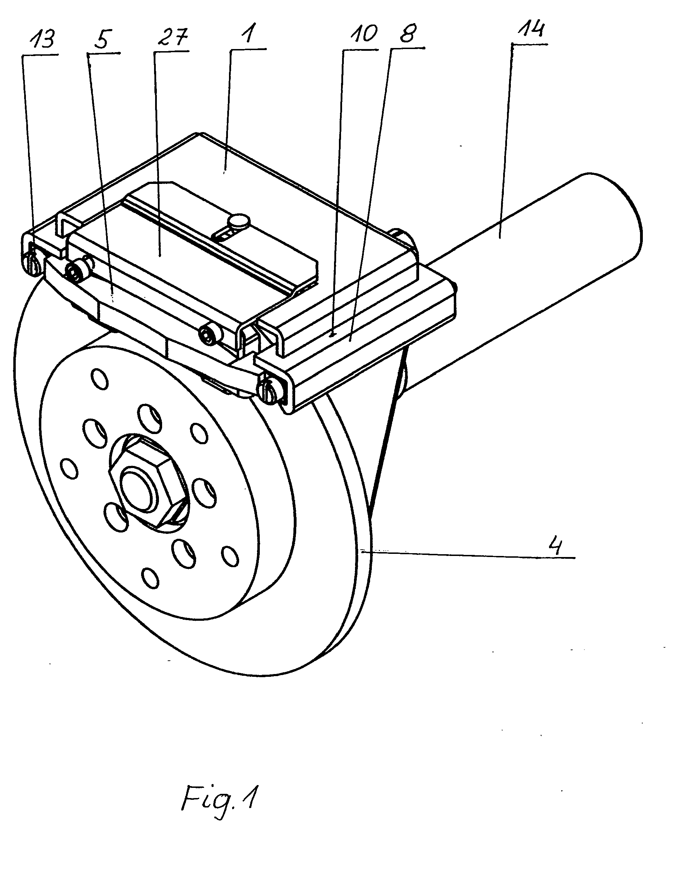

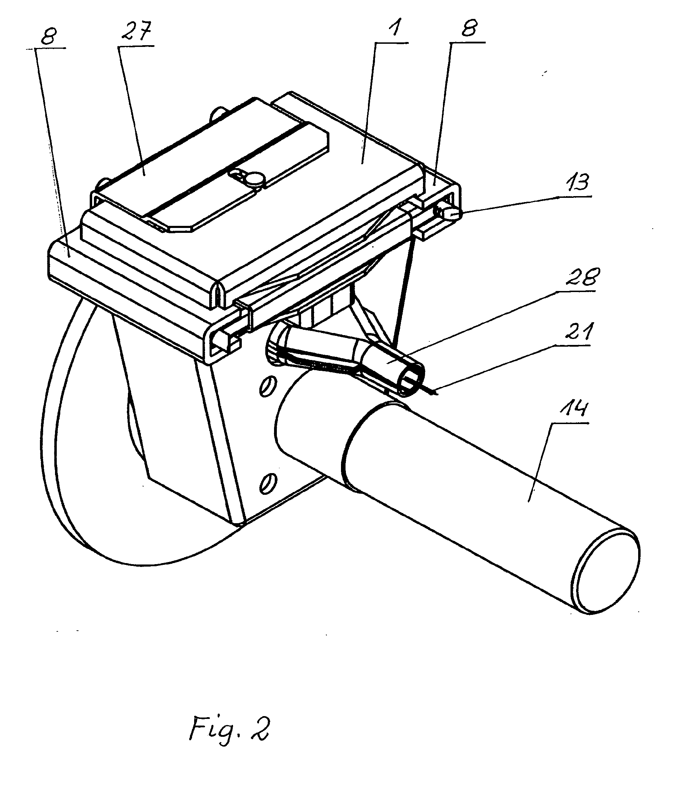

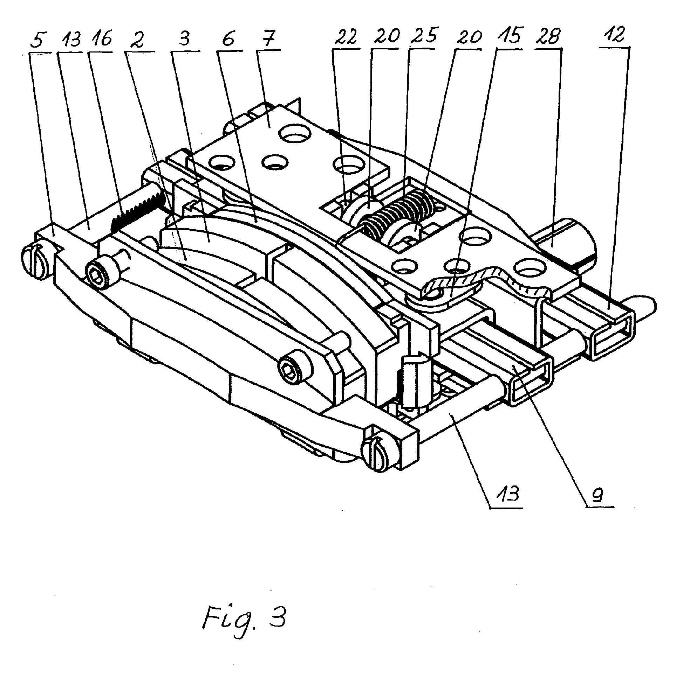

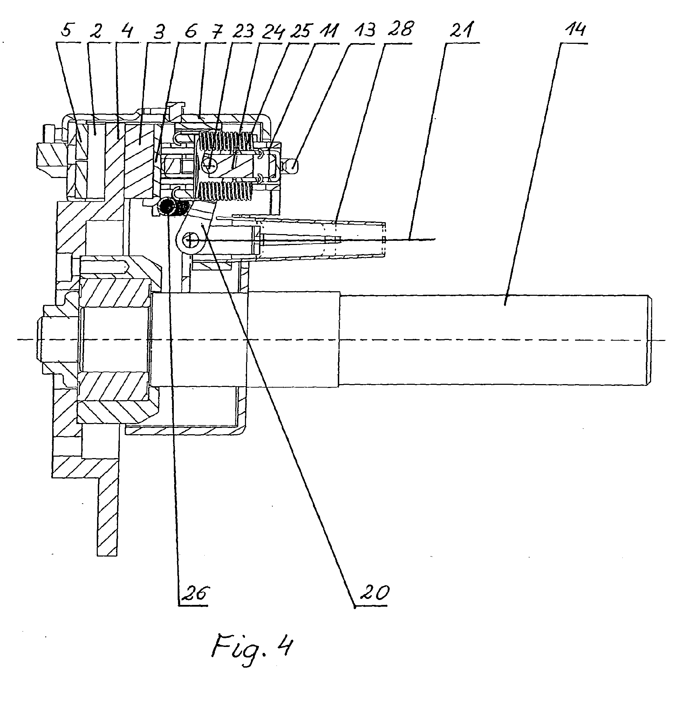

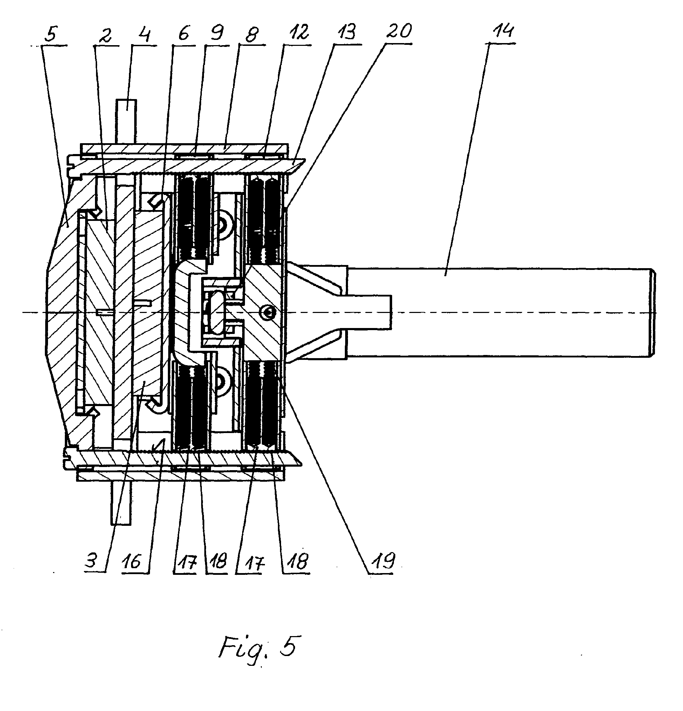

The object of the invention is shown by the example of the drawing, on which fig. 1 represents the overunning disk brake in perspective view from outer side, fig.2 - the brake in perspective view from inner side, fig.3 - the brake in perspective view without a body, fig.4 - the brake in oblong section and fig 5 - the brake in section from above.

The overruning disk brake, according to the invention, is made of a body 1 and brake blocks 2 , 3 pressed down to the disk 4. The brake block 2 , situated at the outer side of the disk 4 is fastened to the first cross beam 5 situated outside the brake and the brake block 3, situated inside of the disk 4 is placed in the second cross beam 6. The first cross beam 5 and the second cross beam 6 make the disk brake caliper. Behind the second cross beam 6 , from the inside of the brake there is the third cross beam 7 .

The first cross beam 5 is placed slidably in slideways 8 of the body 1 . Slideways 8 have the shape of channel bars and they are directed to each other with open spaces. The second crossbeam 6 is placed slidably on the first pawl beam 9 , which, by its ends, is seated slidably on the slideways 8 of the body 1 .

While the third cross beam 7 is run on the outer shelves 10 of slideways 8 . In the cavity 11 of the third crossbeam 7 there is the second pawl beam 12, which, with its ends, is placed slidably in slideways 8 of the body 1 .

The first cross beam 5 and the first pawl beam 9 and the second pawl beam 12 are located on the bolts 13 shielded by slideways 8 . The bolts 13 are situated longitudinally towards the axle 14 . The third cross beam 7 is connected with the second crossbeam 6 self - aligningly in the horizontal plane by means of movable plates 15.

The bolts 13 from the inside have tooth bars 16 , and inside of the first pawl beam 9 and the second pawl beam 12 there are located slidably pawls 17 ended with teeth 18 situated from the side of tooth bars which are on the bolts 13 . The pawls 17 are pressed down to the bolts 13 by means of a push springs 19 .

Between the second cross beam 6 and the third cross beam 7 there is a lever 20 which, with its bottom end is joined with a cable 21 , and with its upper end it is coupled by pins 22 with the third cross beam 7. The axle of rotation 23 of the lever 20 is situated below the pins 22 and it is resisted in the seat of the element 24 which is a part of the second pawl beam 12 . By the lever 20 the springs 25 are mounted,by means of which ,the third cross beam 7 is bound with the second pawl beam 12. From the bottom to the second cross beam 6 and to the third cross beam 7 the tension spring 26 is mounted with its ends.

The cover 27, shielding from above brake blocks 2 , 3 , is fastened to the body 1.

The cable 21 , which is in the conduit has its lead in the tunnel 28, which is a part of the third cross beam 7 .

The first cross beam 5 , the second cross beam 6 and the third cross beam 7 have possibility of shifting in horizontal plane, along the axle 14 , and the second cross beam 6 also crosswisely to the axle 14 .

Braking of the wheels of the trailer during driving forward is done as a result of action of the cable 21 on the lever 20 . The lever 20 , resisting with its axle of rotation 23 against the second pawl beam 12 immobilized by meshing of pawls 17 with tooth bars 16 of the bolts 13 makes partial rotation, shifting , coupled with the lever 20 , the third cross beam 7 towards the disk 4 .

Shifting itself third cross beam 7 by movable plates 15 shifts the second cross beam 6 and also by the bolts 13 shifts the first cross beam 5 which causes simultaneous pressure of brake blocks 2 , 3 to the disk 4 and braking of the trailer.

After stopping, as a result of action of the springs 25 ,pulling off the third cross beam 7 towards the second pawl beam 12 follows and thus return of the lever 20 to the exit position .

While reversing, the wheels of the trailer rotate towards the opposite direction than during driving forwards. The mechanism on the draught bar of the trailer causes stretching of the cable 21 ,which causes starting of braking of wheels .In the meantime , the second cross beam 6 with the brake block 3 by friction connected with turning of the wheel, shifts itself towards the third cross beam 7 in the crosswise direction to the axle 14. Shifting takes on the first pawl beam 9 and it is bounded by movable plates 15. It results in that, in spite , of the shifting of the third cross beam 7 towards the disk 4 , that beam doesn't influence the second cross beam 6 and thus the breaking doesn' t follow, i.e.blocking of the wheels while going back. During starting going forward the tension spring 26 causes pulling of the second cross beam 6 over to the exit position ,in which the movable plates 15 are placed longitudinally towards the axle 14 .

Reduction of clearance arising among the brake blocks 2 , 3 and the disk 4 as a result of abrasion of this blocks follows automatically as a result of cooperation of teeth 18 of the pawls 17 with tooth bars 16 of the bots 13 . Thanks to application of the removed cover 27 you can easily and comfortably change used brake blocks 2 , 3 .

## Claims

1. The overunning disk brake having brake blocks pressed down to the disc by operation of the lever started by a brake cable, moreover, brake blocks are situated in the disk brake caliper, which is led, **characterised in that,** it has got the first cross beam (5) with_the brake block (2) situated by the outer side of the disk(4) placed slidably along the axle (14) in the slideways (8), the second cross beam (6) with the brake block (3) situated by the inner side of the disk (4) placed slidably, crosswise to the axle (14) on the first pawl beam (9), which is slidable along the axle (14) in the slideways (8), the third cross beam (7) situated from the inner side of the brake behind the second cross beam (6) having running on slideways (8), moreover, in the third cross beam (7) there is a second pawl beam (12) which is slidable along the axle (14) in the slideways (8) while the lever (20) which is started by the cable (21), it is placed between the second cross beam (6) and the third cross beam (7) and it is coupled with the third cross beam (7) and it is resisted by its axle of rotation (23) on the second pawl beam (12), while the third cross beam (7) is joined self - aligningly in the horizontal plane with the second cross beam (6), and in the first pawl beam (9) and in the second pawl beam (12) there are situated pawls (17) slidably, having teeth (18) by means of which they mate with tooth bars (16) on the bolts ( 13).

2. The brake, according to claim 1, **characterised in that**, the first cross beam (5), the first pawl beam (9) and the second pawl beam (12) are situated on the bolts (13).

3. The brake, according to claim 1, **characterised in that**, the third cross beam (7) is bound with the second pawl beam (12) by springs (25).

4. The brake, according to claim1, **characterised in that**, to the second cross beam (6) and to the third cross beam (7) the tension spring (26) is mounted with its ends.
